**Europäisches Patentamt**

**European Patent Office**

**Office européen des brevets**

(19)

(11) Veröffentlichungsnummer : **0 013 733**
**B1**

(12) **EUROPÄISCHE PATENTSCHRIFT**

(45) Veröffentlichungstag der Patentschrift :
**11.11.81**

(21) Anmeldenummer : **79105114.7**

(22) Anmeldetag : **12.12.79**

(51) Int. Cl.³ : **B 23 Q 41/00**, **B 65 G 37/02**,
**B 23 P 19/00**

(54) **Variables Transport- und Montagesystem.**

(30) Priorität : **10.01.79 DE 2900650**

(43) Veröffentlichungstag der Anmeldung :
**06.08.80 (Patentblatt 80/16)**

(45) Bekanntmachung des Hinweises auf die Patenterteilung : **11.11.81 Patentblatt 81/45**

(84) Benannte Vertragsstaaten :
**AT CH DE FR GB IT NL SE**

(56) Entgegenhaltungen :
**DE - A1 - 2 515 829**
**DE - A1 - 2 521 787**
**DE - A1 - 2 657 795**
**DE - B2 - 2 501 054**

**MASCHINENMARKT,** Band 81, Nr. 51, 1975,
**Würzburg**
« Montagelinie mit taktunängigen Arbeitsplätzen »
Seiten 943 und 944

**WERKSTATTSTECHNIK,** Band 60, Nr. 8, 1970,
**Berlin**
C.M. DOLEZALEK et al. : « Flexible Fertigungssysteme » Seiten 449 bis 451

**WERKSTATTSTECHNIK,** Band 67, Nr. 4, 1977,
**Berlin**
F. KREMPEL « Flexible Montagesysteme »
Seiteln 223 bis 227

(73) Patentinhaber : **ROBERT BOSCH GMBH**
**Postfach 50**
**D-7000 Stuttgart 1 (DE)**

(72) Erfinder : **Kirsten, Wolfgang**
**Aurikelweg 7**
**D-8971 Burgberg (DE)**
Erfinder : **Hirsch, Kurt**
**Robert Bosch Strasse 30**
**D-8976 Blaichach (DE)**

Variables Transport- und Montagesystem

Stand der Technik

Die Erfindung geht aus von einem Transport- und Montagesystem nach der Gattung des Hauptanspruchs. Bei der üblichen Fließbandarbeit durchläuft ein Werkstück mit bestimmten Anlieferungszustand mehrere hintereinander angeordnete Arbeitsplätze und wird dabei schrittweise vervollkommnet. Dabei ist jeder Arbeitsplatz auf die Zulieferung des Werkstückes durch den jeweils vorgeschalteten Arbeitsplatz angewiesen, sämtliche Arbeitsplätze ein und desselben Fließbandes sind also in ihrem Arbeitsrhythmus an eine bestimmte Taktzeit gebunden. Bei Personalausfall muß der betroffene Arbeitsplatz durch einen sogenannten Springer besetzt werden, damit der Werkstückfluß nicht unterbrochen wird. Um diesen Nachteil zu beheben, wurde zunächst durch örtliche Pufferbildung an jedem Arbeitsplatz eine gewisse Unabhängigkeit von benachbarten Arbeitsplätzen geschaffen. Im Zuge der zunehmenden Humanisierung des Arbeitsplatzes wurde sodann ein Transportsystem zur Verkettung von Arbeitsplätzen geschaffen, was die Zuführung und den Abtransport von Werkstücken mit Pufferbildung vor und nach den Arbeitsplätzen gestattet, wobei an den einzelnen Arbeitsplätzen ohne Taktbildung gearbeitet werden kann (DE-A 25 15 829.6). Dieses System hat jedoch den Nachteil, daß es, sofern es einmal aufgebaut ist, bezüglich einer variablen Werkstückbearbeitung und -behandlung nicht sehr flexibel ist.

In der Zeitschrift « Werkstattstechnik », Band 60, Nr. 8, 1970, Seiten 449 bis 451, sind ferner die Hinweise enthalten, daß Computer den Aufbau, Umbau und die Umstellung von flexiblen Fertigungssystemen steuern und daß in einem Umbauprogramm festgelegt wird, aus welchen Baueinheiten das Fertigungssystem bestehen muß und welche speziellen Baueinheiten auszuwechseln sind. Dabei handelt es sich jedoch offenbar um an sich bekannte Transport- und Montagesysteme, bei welchen die einzelnen Arbeitsplätze nicht über ein eigenes, durch Querförderer aus dem Fließband versorgtes Transportsystem verfügen und daher an einen durch die Fließbandgeschwindigkeit vorgegebenen Takt gebunden sind.

Vorteile der Erfindung

Die erfindungsgemäße Anordnung mit den kennzeichnenden Merkmalen des Hauptanspruchs hat demgegenüber den Vorteil, daß sowohl typbezogen abweichende Arbeitsgänge mit unterschiedlichen Montagefolgen ohne höheren Platzbedarf im System bewältigt werden können als auch an den einzelnen Arbeitsplätzen ohne Taktbildung gearbeitet werden kann. Durch die schnelle Umrüstbarkeit, eignet sich das System besonders für Montageaufgaben bei großem Ty-penspektrum mit unterschiedlichen Typenvarian-ten, da auch die Anordnung mehrerer Spezialplätze möglich ist. Durch die beliebige Austauschbarkeit der einzelnen verschiedenartigen oder gleichartigen Stationseinheiten ist das Transport- und Montagesystem bezüglich den anfallenden Bearbeitungsgängen weitgehend typenflexibel. Es können z.B. im Grenzfall alle Plätze des Erzeugnisses A ausgetauscht werden und durch Arbeitsplätze mit Erzeugnis B belegt werden. Dies gilt insbesondere auch deshalb, weil die Reihenfolge der Stationseinheiten wie z.B. der Arbeitsplätze, Puffer- und Automatikstationen, beliebig kombinierbar ist. Das System weist als weiteren Vorteil eine geringere Gesamtlänge auf, da nicht benötigte Stationseinheiten im Depot verbleiben können, wodurch sich eine kürzere Werkstück-Durchlaufzeit ergibt. Das System ist jedoch problemlos erweiterungsfähig. Das Transport- und Montagesystem ist insbesondere ge-eignet für Werkstückträger-Bandmontagen, so-wie für Einzel- und Parallelplätze. Als weiterer Vorteil ist es anzusehen, daß der Aufbau und die Ausprobe neuer Stationseinheiten außerhalb möglich ist, sowie auch eine dadurch erreichbare Reduzierung der Rüstzeiten, da die Arbeitsplätze schon vor dem Einsetzen in das System umgerüstet werden können. Hierdurch ergibt sich ein höherer Nutzungsgrad. Als weiterer Vorteil sei schließlich erwähnt, daß bei Einplanung von Leerstellen auch nachträglich zusätzliche Arbeitsgänge integrierbar sind.

Durch die in den Unteransprüchen aufgeführ-ten Maßnahmen sind vorteilhafte Wei-terbildungen und Verbesserungen des im Hauptanspruch angegebenen Systems möglich. Auf die weiteren Vorteile wird in der nachfolgenden Beschreibung näher eingegangen.

Zeichnung

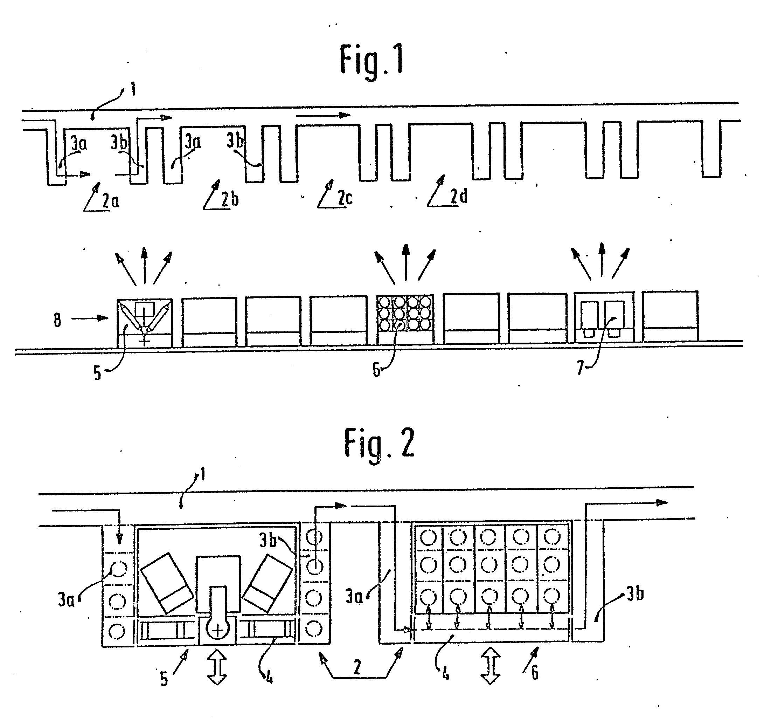

Ein Ausführungsbeispiel der Erfindung ist in der Zeichnung dargestellt und in der nachfolgenden Beschreibung näher erläutert. Es zeigen Fig. 1 eine Prinzipdarstellung des erfindungsgemäßen Transport- und Montagesystems mit nicht eingefahrenen Stationseinheiten, und Fig. 2 eine schematische Darstellung des Systems mit Stationseinheiten in ihrer Arbeitsstellung.

Beschreibung der Erfindung

Das in Fig. 1 dargestellte Transport- und Montagesystem ist im Baukastensystem aufgebaut, wobei ein einheitliches Rastersystem für die auswechselbaren Stationseinheiten wie z.B. Arbeitsplätze 5, Puffer 6 und Automatikstationen 7 vorgesehen ist. Dem in Fig. 1 dargestellten Fließband 1 sind Querförderer 3a und 3b zugeordnet, wobei die Querförderer der Transportzu- bzw. abfuhr der Werkstücke zu den einzelnen Stationsplätzen 2a, 2b, 2c usw. dienen. Die einzelnen Stationsplätze 2a, b, c können sehr unterschiedlich aufgebaut sein. Mögliche Stationseinheiten sind z.B. Bearbeitungsplätze 5, Wechselpuffer 6, automatische Bearbeitungsstationen 7, sowie weitere Bearbeitungs- oder Behandlungsstationen für Werkstücke. Es können beliebig weitere Stationseinheiten wie z.B. Nietvorrichtungen, Schraubvorrichtungen usw. Verwendung finden, soweit die Außenmaße und die Anschlüsse zueinander passen. Die einzelnen Stationseinheiten werden in einem Depot 8 gelagert bzw. für den Einsatz vorbereitet. Dabei können die Stationseinheiten im Rastersystem des Transport- und Montagesystems beliebige Plätze (2a, 2b, 2c uw.) einnehmen.

Fig. 2 zeigt die schematische Darstellung des Transport- und Montagesystems mit einem Arbeitsplatz 5 und einem Wechselpuffer 6 in Arbeitsstellung. Die einzelnen Stationseinheiten sind mit einem eigenen Transportband, einer Rollenbahn oder Gleitschiene 4 ausgerüstet, wodurch die zum Fließband 1 parallele Verbindung der Querförderer 3a, 3b und somit der umgelenkte Werkstücktransport bewerkstelligt wird. Durch die Ausbildung der Stationseinheiten als variable, auswechselbare Baueinheiten können diese beliebig untereinander ausgetauscht werden. Die Stationseinheiten 5, 6, 7 ... werden dabei in das Rastersystem zwischen die Querförderer 3a, 3b eingeschoben und dort arretiert bzw. fixiert. Jede Stationseinheit ist dabei mit der für den Arbeitsgang notwendigen Steuerung ausgerüstet, wobei ein Schnellkupplungssystem für Versorgungsanschlüsse wie z.B. die sofortige Einsatzbereitschaft der Stationseinheit gewährleistet. Dem Transport- und Montagesystem ist ein Depot 8 mit einsatzbereiten, fahrbaren Stationseinheiten zugeordnet, wodurch eine schnelle Ergänzung und/oder Umrüstung des Transport- und Montagesystems ermöglicht wird. Die erfindungsgemäße Einrichtung ist bei allen Bandsystemen anwendbar.

## Ansprüche

1. Transport- und Montagesystem zum Verketten von Stationsplätzen (2a, 2b ...) an einem Fließband (1), welche über ein Arbeitsband (4) verfügen, das zum Zu- und Abführen von Werkstücken über zwei gegenläufige Querförderer (3a, 3b ...) an das Fließband (1) anschließbar ist, dadurch gekennzeichnet, daß die Stationsplätze (2a, 2b ...) durch transportable und beliebig auswechselbare bzw. untereinander austauschbare Stationseinheiten (5, 6, 7) besetzbar sind, welche je ein eigenes, die beiden Querförderer (3a, 3b ...) verbindendes Transportsystem (4) haben und mit den für den betreffenden Arbeitsgang notwendigen Steuerungsmitteln versehen sind.

2. System nach Anspruch 1, dadurch gekennzeichnet, daß die Stationsplätze (2a, 2b, 2c ...) und auswechselbaren Stationseinheiten (5, 6, 7) mit Schnellkupplungen für Versorgungsanschlüsse versehen sind.

3. System nach Anspruch 1 oder 2, dadurch gekennzeichnet, daß die auswechselbaren Stationseinheiten (5, 6, 7) als bewegliche Bearbeitungsplätze (5), Wechselpuffer (6), automatische Bearbeitungsstationen (7) ausgebildet und in ihrer Gebrauchsstellung an das System arretierbar und fixierbar sind.

4. System nach einem der Ansprüche 1 bis 3, gekennzeichnet durch ein Depot (8) mit einsatzbereiten Stationseinheiten (5, 6, 7) zum schnellen Ergänzen und/oder Umrüsten des Systems.

## Claims

1. A transport and assembly system for linking station locations (2a, 2b ...) to a conveyor belt (1), which are at the disposal of a working conveyor (4) which can be connected to the conveyor belt (1) by two oppositely running tranverse conveyors (3a, 3b ...) for the supply and delivery of workpieces, characterised in that, the station locations (2a, 2b ...) can be occupied by basic units (5, 6, 7) which are transportable and exchangeable or interchangeable as desired and each of which has its own transport system (4) connecting the two transverse conveyors (3a, 3b ...) and is provided with control means necessary for the particular operation concerned.

2. A system according to claim 1, characterised in that, the station locations (2a, 2b, 2c ...) and exchangeable basic units (5, 6, 7) provided with rapid couplings for supply connections.

3. A system according to claim 1 or 2, characterised in that, the exchangeable basic units (5, 6, 7) are in the form of moveable working locations (5), exchange buffers (6), automatic working stations and can be stopped and fixed in their positions of use in the system.

4. A system according to one of claims 1 to 3, characterised by a storage facility (8) provided with basic units (5, 6, 7) ready for use, for rapid replenishment and/or change-over of the system.

## Revendications

1. Système de transport et de montage pour relier à un tapis de montage (1) des emplacements de postes (2a, 2b ...) qui disposent d'un tapis fonctionnel (4) susceptible d'être raccordé au tapis de montage (1) par l'intermédiaire de deux transporteurs transversaux (3a, 3b ...) se déplaçant en sens inverse pour amener et enlever des pièces d'œuvre, système caractérisé en ce que les emplacements de postes (2a, 2b ...) sont susceptibles d'être occupés par des unités de construction (5, 6, 7) transportables et susceptibles d'être changées à volonté ou bien d'être permutées entre elles, chacune de ces unités comportant un système de transport propre (4) reliant les deux transporteurs transversaux (3a, 3b ...) et étant munie des moyens de commande nécessaires pour l'opération concernée.

2. Système selon la revendication 1, caractérisé en ce que les emplacements de postes (2a, 2b, 2c ...) et les unités de construction interchangeables (5, 6, 7) sont munis d'accouplements rapides pour les raccordements d'alimentation.

3. Système selon l'une quelconque des revendications 1 et 2, caractérisé en ce que les unités de construction interchangeables (5, 6, 7) revêtent la forme de postes de travail mobiles (5), de magasins-tampons (6), de postes de traitement automatiques (7), et sont susceptibles d'être arrêtées et fixées sur le système à leur emplacement d'utilisation.

4. Système selon l'une quelconque des revendications 1 à 3, caractérisé en ce qu'il comporte un dépôt (8) avec des unités de construction (5, 6, 7) prêtes à être mises en œuvre pour compléter et/ou modifier rapidement l'équipement du système.

Fig.1

Fig.2